# EUROPEAN PATENT APPLICATION

(11) **EP 4 236 394 A1**
(43) Date of publication of application: **30.08.2023**
(21) Application number: 22158893.2
(22) Date of filing: 25.02.2022
(51) Int. Cl.: H04W 4/40

(54) **COOPERATIVE INTELLIGENT TRANSPORT SYSTEM AND METHOD WITH CPM FREESPACE CLASSIFICATION AND FREESPACE SIGNIFICANCE INDEX**

(71) Applicant: DENSO CORPORATION, Kariya-city, Aichi-pref 448-8661 (JP)
(72) Inventor: LEINMÜLLER, Tim, 85386 Eching (DE); MITTAL, Prachi, 85386 Eching (DE)
(74) Representative: Winter, Brandl - Partnerschaft mbB

(57) **Abstract**

A method, a cooperative intelligent transport system and a computer-implemented system for encoding and decoding, transmitting, receiving and decoding, as part of a V2X message, classification for freespace in a cooperative intelligent transport system (C-ITS) using a wireless communication channel for transmitting, receiving, processing and/or discarding a plurality of collective perception messages (CPMs) containing information about one or more on-board sensors, one or more objects detected by said on-board sensors and/or one or more detected freespaces within a traffic environment, include means and steps, respectively, for determining classification information of a detected freespace, said classification information being configured to indicate to a receiver of a CPM a type of said detected freespace, determining and adding a freespace significance index (FSI) within a CPM based on said classification information of said detected freespace, accuracy and time of freespace detection, and/or a driving situation within said traffic environment, said significance index of freespace (FSI) being configured to indicate a level of significance of sharing information about a certain freespace when generating a CPM, and prioritizing freespace information within a CPM and/or prioritizing the inclusion of freespace information into a CPM in accordance with the determined FSI.

## Description

### Technical Field

The present invention relates to generating a V2X message based on the significance of information on a communication channel in a cooperative intelligent transport system (C-ITS) using a wireless communication channel for transmitting, receiving, processing and/or discarding a plurality of collective perception messages (CPMs) containing information about on-board sensors, one or more objects detected by said on-board sensors and one or more detected freespaces within a traffic environment.

### Prior Art

A known cooperative intelligent transport system (C-ITS) comprises of ITS stations (e.g., vehicles and/or roadside units) that exchange information with each other using (direct) wireless communication, known as vehicle-to-x, or vehicle-to-everything, (V2X) (direct).

V2X is a generic term for traffic networking, electronic communication of road users with each other in the forms of vehicle-to-vehicle (V2V), vehicle-to-infrastructure (V2I), vehicle-to-network (V2N), vehicle-to-pedestrian (V2P), and vehicle-to-vulnerable road user (V2VRU). Wireless communication can be based on the IEEE 802.11 WLAN standard (the 802.11p extension, and e.g., its European profile ITS-G5) and is specifically termed WLAN-V2X. Alternatively, the wireless communication can be based on the 3GPP standards, specifically termed Cellular-V2X, C-V2X, or sidelink. In V2X communication, for example, safety and traffic messages, emergency and service data, toll billing and navigation as well as Internet and database content are exchanged. The aims of V2X communication include notifying not only vulnerable road users (VRUs), but also drivers of critical and dangerous situations at an early stage, improving the vehicles' awareness of their surroundings, supporting the vehicles' driver assistance systems, and supporting cooperative automated mobility, thereby improving traffic safety and optimizing traffic flow.

The ITS stations (ITS-Ss) in the C-ITS share CAMs (Cooperative Awareness Messages) to inform each other about their own position, kinematics, and other data. The ITS-Ss use DENMs (Decentralized Environmental Notification Messages) to inform each other on dedicated events, such as hard braking or obstacles on the road.

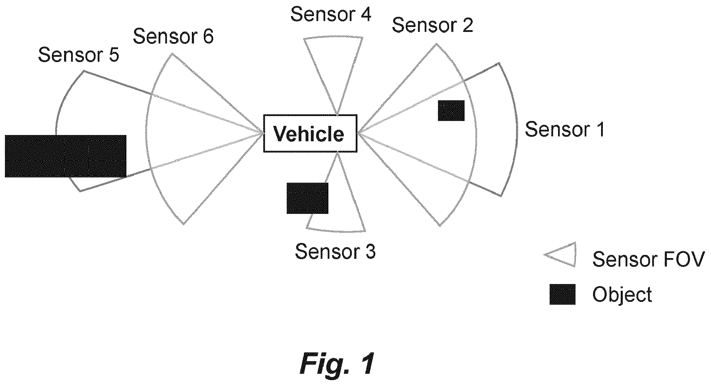

Another V2X message is the Collective Perception Message (CPM) that contains information about on-board sensors, such as field-of-views (FOVs), free-space, and the objects detected within the traffic environment by the on-board sensors of an ITS-S. Fig. 1 shows an example of a vehicle setup comprising a vehicle with sensors 1 to 6 each having a predetermined field-of-view. Exemplary objects are illustrated in the vicinity of the vehicle.

CPMs are sent out periodically and contain information on one or more detected objects, one or more detected freespaces, or freespace polygons, respectively, field-of-views and other characteristics of vehicle on-board sensors such as e.g., a radar, a camera and the like. CPMs are composed by the Collective Perception Service (CPS) within the facility layer of the ETSI ITS stack, as shown in Fig. 2 illustrating the ETSI ITS-Stack and CPS in a CPS-centric view. CPMs are composed and transmitted as per CPM generation rules of CPS. The current functions of CPS are illustrated in Fig. 3 and will be further referred to in connection with Fig. 4 below.

In C-ITS, a concept of Decentralized Congestion Control (DCC) is employed to handle a congested channel. DCC operates at all layers of the ETSI ITS stack.

ETSI TR 103 562 V2.1.1 (2019-12) (Intelligent Transport Systems (ITS); Vehicular Communications; Basic Set of Applications; Analysis of the Collective Perception Service (CPS); Release 2) describes a concept of a freespace addendum container inclusion management.

As further described in ETSI TR 103 562 V2.1.1 (2019-12), confirmed free space in a CPM can be indicated as part of the SensorlnformationContainer. A combination of the freespace indication (FreeSpaceConfidence DE in the SensorlnformationContainer) and described objects can be combined to derive the free space by using a tracing and shadowing approach. The FreespaceAddendumContainer should be added whenever a free space area as would be computed on a receiver side using a simple tracing approach does not reflect the detected free space of the ITS-S generating the CPM. The FreespaceAddendumContainer lists areas that are unoccupied by an object.

A CPM generated as part of a generation event may include additional information about monitored free space areas known to the transmitting ITS-S by adding a FreeSpaceAddendum DF to the FreeSpaceAddendumContainer.

Receivers are able to combine the reported detection area of the SensorlnformationContainer and the reported objects to derive free space between the objects. The confidence level of a free space can be defined as the ratio of the number of detected evidence of free space with respect to the total number of detection attempts within a specified time period. FreeSpaceConfidence should be used to indicate the corresponding confidence. In combination with received objects, a receiver can employ the free space confidence indication to compute the resulting free space by applying a simple ray-tracing algorithm. For each object detected by a transmitter, the receiver is able to compute the resulting non-free and shadowed areas for which no or insufficient measurement areas are available. Because not all objects known to a transmitter will be reported in every CPM, the receiver needs to ensure that suitable tracking and prediction mechanisms for previously transmitted objects are employed to update the shadowed area accordingly.

In the above context, FreeSpaceConfidence describes the isotropic free space confidence that can be assumed for the entire detection area of a particular sensor. Shadowed areas can be derived from provided objects. Deviations from this free space derivation can be expressed in the FreeSpaceAddendum. FreeSpaceArea is defined as the described area that is considered as not occupied by any traffic participant or obstacle by the disseminating ITS-S. For example, a value between 1 and 100 may be used to express the confidence for the described area. A FreeSpacePolygon is defined as a sequence of node points from a given offset point to describe an arbitrary area shape. Likewise, FreeSpaceCircular is defined as a description of a circular area, FreeSpaceEllipse is defined as a description of an elliptical area, and FreeSpaceRectangle is defined as a description of a rectangular area.

### Summary of the Invention

### Technical Problem

A CPM can contain information on detected freespace (detected freespace polygons), however without indicating what type (such as e.g. drivable road, curb, on-street parking etc.) a detected freespace is. Depending on a current traffic situation, it could however be useful for a receiver to know the type of freespace, and certain freespace might be more relevant and/or more significant to share with other vehicles, and therefore be more relevant and/or more significant to include in a CPM. Thus, there is a need to classify detected freespace, for example as "drivable" (i.e. freespace that an/another vehicle can drive to, "on-street parking" (for a vehicle that is looking for a parking spot, which is e.g. detected from a corresponding driving pattern), or "drivable" in case of vehicles executing immanent crash-avoidance maneuvers, either independently or cooperative. Due to constraints such as sensing limitations, however, a vehicle's freespace classification may be incomplete or even wrongfully classified as "freespace".

In view of the above, it is an object of the present invention to provide a method, a cooperative intelligent transport system and a computer-implemented system capable of incorporating classification information of freespace into CPMs in accordance with a significance level of freespace. Also, the method, the cooperative intelligent transport system and the computer-implemented system shall support a collaborative/cooperative classification of freespace.

### Solution to the Problem

This object is accomplished solved by the subject matters of claims 1, 15 and 16. Further aspects of the invention are defined in the subclaims.

The inventors of this invention conceived a concept of freespace classification and significance, prioritization of different freespace information, and prioritized inclusion of freespace information into CPMs. The concept is open to collaborative classification of freespace. The freespace classification and significance concept uses a method for encoding and decoding, transmitting, receiving and decoding, as part of a V2X message, classification for freespace in a cooperative intelligent transport system (C-ITS) using a wireless communication channel for transmitting, receiving, processing and/or discarding a plurality of collective perception messages (CPMs) containing information about one or more on-board sensors, one or more objects detected by said on-board sensors and/or one or more detected freespaces within a traffic environment. The method comprises a step of determining classification information of a detected freespace, wherein said classification information is configured to indicate to a receiver of a CPM a type of said detected freespace. The method further comprises a step of determining and adding a freespace significance index (FSI) within a CPM based on said classification information of said detected freespace, based on accuracy and time of freespace detection, and/or based on a driving situation within said traffic environment, wherein said significance index of freespace (FSI) is configured to indicate a level of significance of sharing information about a certain freespace. The method is then configured to prioritize freespace information within a CPM and/or prioritize the inclusion of freespace information into a CPM in accordance with the determined FSI. For example, the level of significance of sharing information about a certain freespace may be preferably indicated when generating a CPM.

Within the above described concept, classification information and a significance for freespace are sent out within a CPM. The classification information and significance for freespace is specifically sent out if the freespace is a parking spot, and/or if the freespace is "drivable" in case of immanent crash-avoidance situations. Corresponding information can be obtained from the CPS from ITS-S on-board sensors, such as a surround-view camera system, a cloud server running services such as e.g. a "find a parking sport" service, etc. It is understood that the present invention is in no way limited to such practical implementations and can be modified within the framework of the invention as will readily unfold to the skilled person from the overall disclosure herein.

A receiver ITS-S of the above-described information then, for example, uses this information for own applications, such as applications for updating a local map, initiating a parking maneuver when freespace is a parking spot, avoiding stopping over when the freespace is a "no stop area", etc. Again, it is understood that the present invention is in no way limited to such practical implementations and can be modified within the framework of the invention as will readily unfold to the skilled person from the overall disclosure herein.

Specifically, the significance of freespace is introduced by determining and adding a so-called freespace significance index (FSI) according to predetermined criteria, and taking into account the determined FSI when creating, or generating, CPMs. In a modification, the FSI is integrated similar to an object significance index indicating an object significance of detected objects within a CPM.

According to a first aspect of the present invention, a method is provided for encoding and decoding, transmitting, receiving and decoding, as part of a V2X message, classification for freespace in a cooperative intelligent transport system (C-ITS) using a wireless communication channel for transmitting, receiving, processing and/or discarding a plurality of collective perception messages (CPMs) containing information about one or more on-board sensors, one or more objects detected by said on-board sensors and/or one or more detected freespaces within a traffic environment, said method comprising the steps of:
determining classification information of a detected freespace, said classification information being configured to indicate to a receiver of a CPM a type of said detected freespace
determining and adding a freespace significance index (FSI) within a CPM based on said classification information of said detected freespace, accuracy and time of freespace detection, and/or a driving situation within said traffic environment, said significance index of freespace (FSI) being configured to indicate a level of significance of sharing information about a certain freespace when generating a CPM; and
prioritizing freespace information within a CPM and/or prioritizing the inclusion of freespace information into a CPM in accordance with the determined FSI.

According to a second aspect of the present invention, which depends on the first aspect, said classification information includes at least one of road, off-road, drivable, and on-street parking. As used herein and exemplified above, said classification information is configured to indicate generally drivable freespace, such as drivable freespace that an own vehicle can drive to (e.g. road, off-road, drivable) or drivable freespace for a vehicle that is looking for a parking spot (e.g. on-street parking), in comparison to non-drivable freespace a vehicle cannot drive to.

According to a third aspect of the present invention, which depends on the first or the second aspect, said step of determining classification information is configured to use cooperative classification based on classification information from multiple ITS-Ss, said cooperative classification including at least freespace classification from different viewing or detection angles. More specifically, said cooperative classification including at least freespace classification from different viewing or detection angles can be achieved cooperatively by sharing different pieces of information on the same freespace area from different angles, and/or by using received information and combining it with own information, in which case, for example, a vehicle configured to send information on freespace based on multiple ITS-Ss uses information received from other ITS-Ss and adds thereto own information as perceived by its own sensors prior to sending the so combined information.

According to a fourth aspect of the present invention, which depends on one of the first to third aspects, said step of determining a freespace significance index (FSI) includes an accuracy-based determination scheme using a confidence of freespace detection, wherein the higher the confidence of freespace detection, the higher the FSI.

According to a fifth aspect of the present invention, which depends on one of the first to fourth aspects, said step of determining a freespace significance index (FSI) includes a determination scheme, said determination being configured to increase the FSI if detected freespace is determined to deviate in size and/or location from freespace communicated by another ITS-S or if previously shared freespace information is determined to be outdated, to thereby provide for an adaptation of previously shared freespace.

For example, if detected freespace deviates in size and/or location from freespace communicated by another ITS-S, the detected freespace is preferably considered to be outdated. Thus, the determination configured to increase the FSI based on the deviation of a size and/or a location of freespace may be configured to be independent from time. A configuration may, however, also be such that the determination scheme is time-based, i.e. the FSI includes a time-based determination, and yields different results when a) the freespace information is determined to be still the same at e.g. different determinations or times of determination, or b) the freespace information is determined to be no longer the same, i.e. outdated, at e.g. different determinations or times of determination. As described above, it is understood that the invention is not limited to a particular determination scheme.

According to a sixth aspect of the present invention, which depends on one of the first to fifth aspects, said step of determining a freespace significance index (FSI) includes a situation-based determination scheme, said situation-based determination being configured to adhere to an accuracy-based determination scheme using a confidence of freespace detection in which the higher the confidence of freespace detection, the higher the FSI, in a normal driving situation, and to increase the FSI in driving situations other than a normal driving situation, to thereby prioritize the sharing of freespace information.

According to a seventh aspect of the present invention, which depends on the sixth aspect, said driving situations other than a normal driving situation include at least one of a parking situation, an emergency vehicle approaching situation, and a pre-crash situation.

According to an eighth aspect of the present invention, which depends on the sixth aspect, in a parking situation the FSI is increased for freespace classifying as a parking space suitable for the vehicle size and/or class and the closer such parking space is, wherein the closer such parking space, the higher the significance, to thereby prioritize the sharing of freespace classifying as a suitable parking space.

According to a ninth aspect of the present invention, which depends on the sixth aspect, in an emergency vehicle approaching situation the FSI is increased for freespace classifying as usable for a vehicle to make way for an approaching emergency vehicle, to thereby prioritize the sharing of freespace classifying as space to drive to and to give way.

According to a tenth aspect of the present invention, which depends on the sixth aspect, in a pre-crash situation the FSI is increased for freespace classifying as being usable for evasive maneuvers, wherein the more suitable and/or the closer such freespace to an involved vehicle, the higher the significance, to thereby prioritize the sharing of freespace classifying as being usable for evasive maneuvers.

According to an eleventh aspect of the present invention, which depends on the tenth aspect, the FSI is increased and/or sent directly if it is determined that usable freespace is close and available.

According to a twelfth aspect of the present invention, which depends on one of the first to eleventh aspects, a CPS is configured to obtain freespace classification from entities external to an ITS stack.

According to a thirteenth aspect of the present invention, which depends on any of the first to twelfth aspects, received freespace classification information is used for applications running in a vehicle.

According to a fourteenth aspect of the present invention, which depends on any of the first to thirteenth aspects, the ITS-S is a vehicle or a roadside unit (RSU), wherein the wireless communication is direct vehicle-to-x (V2X) communication, and wherein said detected freespaces are one or more freespace polygons.

According to a fifteenth aspect of the present invention, a cooperative intelligent transport system is provided arranged to encode and decode, transmit, receive and decode, as part of a V2X message, classification for freespace in a cooperative intelligent transport system (C-ITS) using a wireless communication channel for transmitting, receiving, processing and/or discarding a plurality of collective perception messages (CPMs) containing information about one or more on-board sensors, one or more objects detected by said on-board sensors and/or one or more detected freespaces within a traffic environment, said cooperative intelligent transport system being arranged to perform the method according to one of the preceding aspects and comprising:
a determining unit arranged to determine classification information of a detected freespace, said classification information being configured to indicate to a receiver of a CPM a type of said detected freespace;
a determining and adding unit arranged to determine and add a freespace significance index (FSI) within a CPM based on said classification information of said detected freespace, accuracy and time of freespace detection, and/or a driving situation within said traffic environment, said significance index of freespace (FSI) being configured to indicate a level of significance of sharing information about a certain freespace when generating a CPM; and
a prioritizing unit arranged to prioritize freespace information within a CPM and/or prioritizing the inclusion of freespace information into a CPM in accordance with the determined FSI.

According to a sixteenth aspect of the present invention, a computer-implemented system is provided arranged to encode and decode, transmit, receive and decode, as part of a V2X message, classification for freespace in a cooperative intelligent transport system (C-ITS) using a wireless communication channel for transmitting, receiving, processing and/or discarding a plurality of collective perception messages (CPMs) containing information about on-board sensors and/or objects detected by said onboard sensors within a traffic environment,
said computer-implemented system being arranged to perform the method according to one of the preceding aspects and comprising a memory for storing instructions which, when carried out by a processor, cause the processor to perform the steps of
determining classification information of a detected freespace, said classification information being configured to indicate to a receiver of a CPM a type of said detected freespace
determining and adding a freespace significance index (FSI) within a CPM based on said classification information of said detected freespace, accuracy and time of freespace detection, and/or a driving situation within said traffic environment, said significance index of freespace (FSI) being configured to indicate a level of significance of sharing information about a certain freespace when generating a CPM; and
prioritizing freespace information within a CPM and/or prioritizing the inclusion of freespace information into a CPM in accordance with the determined FSI.

It is understood that the above second to fourteenth aspects are likewise applicable to the systems according to the fifteenth and sixteenth aspects of the present invention.

The present invention is designed to advantageously provide for a consideration of additional parameters (e.g. detection confidence, location discrepancy etc.) for significance determination, a consideration of any type of objects (not just e.g. VRUs), a consideration of any type of ITS-S (not just e.g. vehicles), a consideration of Area perception Requests (APR), a transmission of the significance parameter itself, a selective aggregation of objects (as opposed to single message per object, or aggregation of all detected objects in one message), and a consideration of a specific V2X message (CPM).

In the above concept, it is understood that in case of limited processing capacity, an arrangement is preferably such that at least received CPMs with a high FSI are processed first.

As further understood, in the above context and without being limited thereto, ITS-Ss at least comprise vehicles and/or roadside units in the traffic environment the afore-mentioned aspects are applicable to.

### Brief Description of the Drawings

Hereinafter, the present invention is described more in detail with reference to the drawings and the corresponding detailed description, wherein:
Fig. 1 illustrates an exemplary vehicle setup in which a vehicle is equipped with sensors each having a predetermined field-of-view and exemplary environmental objects are located in the vicinity of the vehicle;

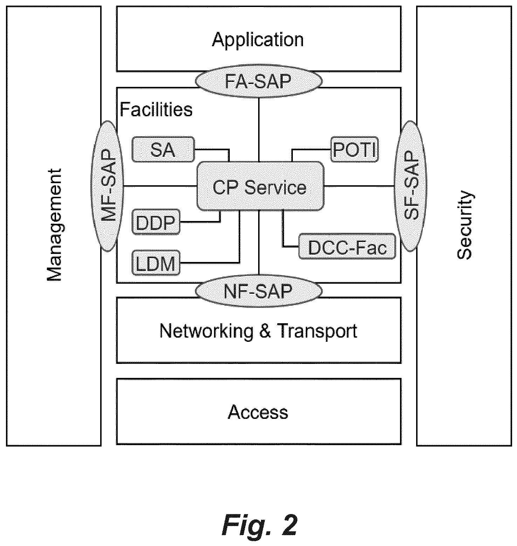

Fig. 2 illustrates the ETSI ITS-Stack and CPS in a CPS-centric view;

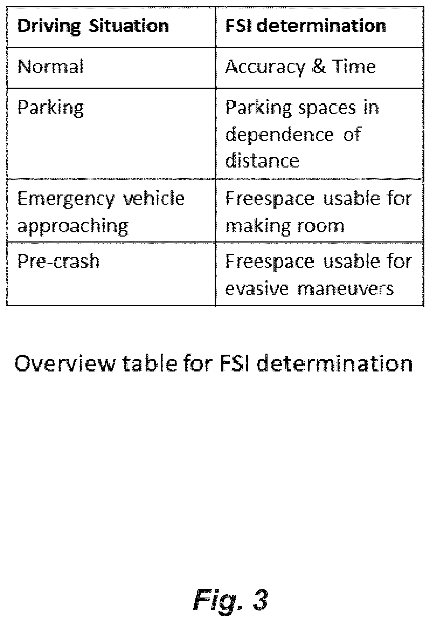

Fig. 3 illustrates an overview table for FSI determination;

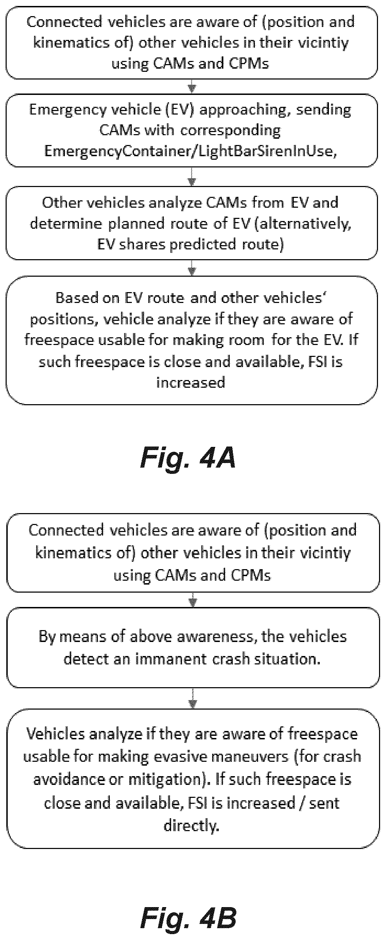

Fig. 4A and 4B illustrate process flows in exemplary driving situations;

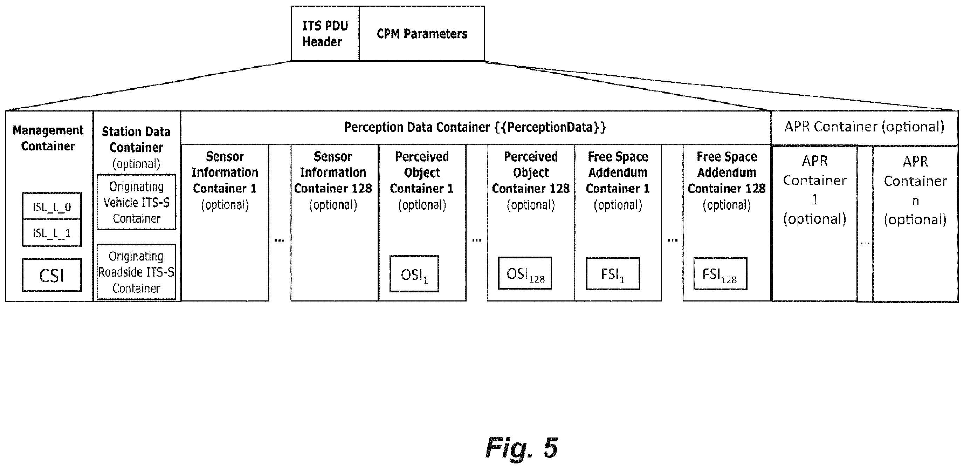

Fig. 5 depicts, in a general overview, where additions as described herein may suitably weave into the current ETSI CPM format; and

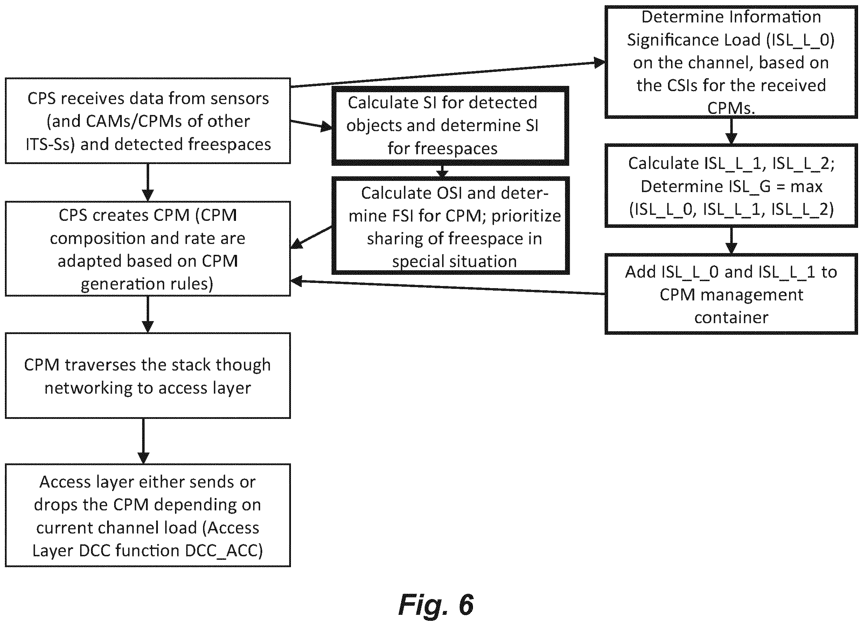

Fig. 6 illustrates the interlinking of CPM transmission and DCC executed at an ITS-S at layers of the ETSI ITS stack including the concept of a freespace significance index introduced into CPMs, and the concept of a significance index level.

### Description of the Embodiment

As mentioned at the outset, V2X is a generic term for traffic networking, electronic communication of road users with each other in the forms of vehicle-to-vehicle (V2V), vehicle-to-infrastructure (V2I), vehicle-to-network (V2N) and vehicle-to-pedestrian (V2P). Wireless communication can be based on the IEEE 802.11 WLAN standard (the 802.11p extension, and e.g., its European profile ITS-G5) and is specifically termed WLAN-V2X. Alternatively, the wireless communication can be based on the 3GPP standards, specifically termed Cellular-V2X, C-V2X, or sidelink. In V2X, for example, safety and traffic messages, emergency and service data, toll billing and navigation as well as Internet and database content are exchanged. The aims of V2V include notifying drivers of critical and dangerous situations at an early stage, improving the vehicles' awareness of their surroundings, supporting the vehicles' driver assistance systems, and supporting cooperative automated mobility, thereby improving traffic safety and optimizing traffic flow.

Two alternative access layer technologies for ITS have been defined by the Institute of Electrical and Electronics Engineers (IEEE) and the Third Generation Partnership Project (3GPP), respectively.

The first approach is often referred to as Dedicated Short-Range Communication (DSRC), which supports vehicular ad-hoc connectivity using Wireless Local Area Network (WLAN) technologies standardized as IEEE 802.11p, which is the basis for the European standard ETSI ITS-G5. The second approach is Cellular-based V2X (C-V2X), a proposal by the 3GPP, based on Long-Term Evolution (LTE), also known as LTE-V2X or sidelink.

In this context, cooperative awareness within road traffic means that road users and roadside infrastructure are informed about each other's position, dynamics and attributes. Road users are all kind of users on or near the road that play a role in traffic safety and control, such as cars, trucks, motorcycles, bicycles or even pedestrians and roadside infrastructure equipment including road signs, traffic lights or barriers and gates. The awareness of each other is the basis for several road safety and traffic efficiency applications with many use cases as described in ETSI TR 102 638. It is achieved by regular broadcasting of information among the road users, from vehicle to vehicle (V2V), but also from infrastructure to any road user, V2I, I2V or X2X based on wireless networks, called V2X network and as such is part of Intelligent Transport Systems (ITS).

Cooperative safety and traffic efficiency applications require Intelligent Transportation System (ITS) sub-systems (road users, roadside units, etc.) and their ITS-Stations (ITS-Ss) to develop situational awareness that includes the presence and behavior of road users in their vicinity. Vehicle sub-systems and roadside sub-systems develop their situational awareness from their perception sensors and through communication with other surrounding ITS-Ss. The CA basic service EN 302 637-2, is a European Norm (EN) that specifies how an ITS-S can inform others about its associated sub-systems position, dynamics and attributes by sending Cooperative Awareness Messages (CAMs) according to EN 302 637-2.

The Collective Perception service (CP service or CPS) complements the CA basic service. The CPS specification defines how an ITS-S can inform others about the position, dynamics and attributes of neighboring road users, other objects, and freespace detected by local perception sensors. The CPS enables ITS sub-systems to share information about other road users and obstacles that were detected by local perception sensors such as radars, cameras and the like. In that sense, it aims at increasing awareness between ITS sub-systems by mutually contributing information about their perceived objects to the individual knowledge base of the sub-system.

The Collective Perception Message (CPM) enables sharing of information about detected objects by the disseminating ITS sub-system. The message consists of information about the disseminating ITS sub-system, its sensory capabilities and its detected objects. For this purpose, the message provides generic data elements to describe detected objects in the reference frame of the disseminating ITS sub-system. The CPM is transmitted cyclically with adaptive message generation rates to decrease the resulting channel load while focusing on reporting changes in the dynamic road environment.

In particular, draft ETSI Technical Specification ETSI TS 103 324, currently in the form of V0.0.22 draft (2021-05), focuses on the specifications of CPMs transmitted by ITS-Ss participating in the V2X network and the specification of the CPS with trigger conditions for sending CPMs.

As used herein, an object in the context of the CPS is defined as the state space representation of a physically detected object within a sensor's perception range, an object list is defined as a collection of objects temporally aligned to the same timestamp, the Collective Perception (CP) Service is defined as a facility at the ITS-S facilities layer to generate, receive and process CPMs, the Collective Perception Message (CPM) is defined as a CP service PDU (Protocol Data Unit), Collective Perception Message (CPM) data is defined as a partial or complete CPM payload, the Collective Perception (CPM) protocol is defined as the ITS facilities layer protocol for the operation of the CPM transmission and reception, an ITS station is defined as a functional entity specified by the ITS station (ITS-S) reference architecture, an Object confidence is defined as a quantification of the confidence that a detected object actually exists, i.e., has been detected previously and has continuously been detected by a sensor, a Roadside ITS station is defined as an ITS station in a roadside ITS sub-system, a Sensor Measurement is defined as the operation of a sensor based on its working principle to generate a state space representation for detected objects, a State Space Representation is defined as the mathematical description of a detected object consisting of state variables such as distance, speed, object dimensions, etc., and a Vehicle ITS station is defined as an ITS station in a vehicular ITS sub-system. CPU(s) in an ITS-S carry out the respective layer functions, namely application layer, facilities layer, and network and transport layer.

Fig. 2 depicts in more detail the Collective Perception Service (CPS) within the ITS-S architecture along with the logical interfaces to other layers and entities within the Facilities layer. The CPS is a Facilities layer entity in the ITS-S-S architecture. It interfaces with other entities of the Facilities layer and with ITS applications to collect relevant information for CPM generation and for forwarding received CPM content for further processing.

The entities for the collection of data to generate a CPM are the Device Data Provider (DDP), the Position and Time management (POTI) and the Local Dynamic Map (LDM). For vehicle ITS sub-systems, the DDP is connected with the in-vehicle network and provides the vehicle state information. For roadside ITS sub-systems, the DDP is connected to sensors mounted on the roadside infrastructure such as poles or gantries. The POTI entity provides the position of the ITS-S and time information. The LDM is a database in the ITS-S, which in addition to on-board sensor data is configured to be updated with received data from message such as CAM and CPM. ITS applications retrieve information from the LDM for further processing. The CPS also interfaces with the Service Announcement (SA) Service to indicate an ITS-S's ability to generate CPMs and to provide details about the communication technology/ies used.

Message dissemination-specific information related to the current channel utilization are received by interfacing with the DCC-FAC (Decentralized Congestion Control for Facility Layer) entity and the DCC-Cross entity (located in the Management plane, not shown in Fig.2). The CPS interfaces through the NF-SAP (SAP for Networking-Facility layer interface) with the networking & transport layer (N&T) for exchanging of CPMs with other ITS-Ss, the SF-SAP (SAP for Security-Facility layer interface) with the Security entity to access security services for CPM transmission and CPM reception, the MF-SAP (SAP for Management-Facility layer interface) with the Management entity and the FA-SAP (SAP for Facility-Application layer interface) with the application layer if received CPM data is provided directly to the applications. It is noted that SAP stands for Service Access Point, and that SA stands for Service Announcement.

As shown in Fig. 3, when a freespace significance index (FSI) is determined for a freespace (freespace information contained in a CPM), the determination is situation dependent based on one or more driving situations occurring in the traffic environment a vehicle is in and a CPM is sent out and transmitted.

In this embodiment, driving situations are detected and/or determined independently by every vehicle, based on the data that the vehicle is collecting on its environment, using sensors and V2X communication. Thereby, a configuration may preferably be such that different driving situations have different priorities between themselves, with pre-crash having highest priority and parking having lowest priority.

In the above environment, a general (and first) driving situation is a normal driving situation in which the FSI determination is carried out based on accuracy and time.

Accuracy based as used herein means that the FSI determination is based on a confidence (value) of freespace detection. The higher the confidence / a confidence value is, the higher the significance of sharing information about a certain freespace is. A higher significance of sharing means that a certain classified freespace is determined to be more relevant and/or significant to share with other vehicles, and therefore is determined to be included in a CPM.

Time based as used herein means that if detected and shared freespace is of a different size, e.g. smaller, than freespace communicated by another station (for example because of objects at "borders" of a freespace), previously shared freespace is adapted correspondingly in order to properly reflect currently detected freespace. Also, time based as use herein includes and provides for an adaptation if previously shared freespace is determined to be outdated.

A second driving situation is a non-normal driving situation and refers to driving situations usually requiring more or particular attention, such as a parking situation, a situation in which an emergency vehicle is around and approaching, or a possibility of a collision is detected and a vehicle is determined to be in a pre-crash situation requiring crash avoidance measures such as evasive maneuvers. Evasive maneuvers as used herein require a vehicle to leave its current travel path and to give way into available freespace.

It is noted that in circumstances as mentioned above, such as a parking situation, an approaching emergency vehicle, or a pre-crash situation, for example, the driving situation may be different for each vehicle (and e.g. not be communicated via V2X and/or not be shared via a back-end server), and may not be established just for the ego-vehicle, but also for other vehicles identified in the environment (such as, in a parking situation, for example other vehicles also searching for a parking space). Therefore, in the context of the present embodiment, the second, non-normal driving situation is detected differently from the first, normal driving situation, e.g. based on a driving pattern, by indicators activating or lighting up, and the like. The selection of CPA freespace information is not global but strictly local. CPA (Cross Platform Authentication) is technically specified in ETSI TS 103 407 V1.1.1 (2016-04).

In a parking situation, for example, detected freespaces are informed to be parking spaces dependent on the distance from the vehicle seeking a parking space. Thus, in a parking situation, priority is given to share freespaces classifying as parking spaces. The closer a parking space is to a parking space seeking vehicle, the higher the respectively determined significance is. The process is preferably configured to include only parking spaces that are suitable, i.e. large enough, for the vehicle size or class.

In a situation where an emergency vehicle is detected to be approaching, for example by using a camera, detecting sound, or from CAMs containing an emergency vehicle flag, e.g. when a sounding emergency vehicle siren or flashing emergency vehicle lights is detected in the vicinity or a detection range of the vehicle and the like, priority is given to share freespace the vehicle can drive to in a movement of giving way, i.e. freespace that is usable for making room for, or giving way to, the emergency vehicle.

In a situation which is determined to be a pre-crash situation, priority is given to share freespace usable for evasive maneuvers. The more suitable and/or close to an involved vehicle freespace determined to be usable is, the higher the significance is.

Fig. 4A and 4B illustrate processes carried out in an example emergency vehicle situation (FIG. 4A) and an evasive maneuver situation (FIG. 4B). It is understood that the invention is not limited to these example processes, and that other driving situations are conceivable in which similar or suitably modified actions may be taken, as may unfold to the skilled person within the framework disclosed herein.

As shown in FIG: 4A, in an emergency vehicle situation, connected vehicles are aware of (position and kinematics of) other vehicles in their vicinity using CAMs and CPMs. An approaching emergency vehicle (EV) sends out CAMs with corresponding EmergencyContainer/LightBarSirenInUse indications. Other vehicles analyze the CAMs from the EV and determine the planned route of the EV. Alternatively, the EV may share a predicted route. Based on the route of the EV and the positions of other vehicles, vehicles analyze if they are aware of freespace usable for making room for the EV. If such freespace is close and available, the FSI is increased.

As shown in FIG. 4B, in an evasive maneuver situation, connected vehicles are aware of (position and kinematics of) other vehicles in their vicinity using CAMs and CPMs. Based on this awareness, the vehicles detect an immanent crash situation. Vehicles then analyze if they are aware of freespace usable for making evasive maneuvers (for crash avoidance or mitigation). If such freespace is close and available, the FSI is increased and/or sent directly.

It is noted that in such processes and determinations, freespace parameters to be added may, without being limited thereto, include classification, e.g. a type of freespace (such as road, off-road, ...), features of freespace (such as parking, reserved lane (e.g. bus only, bycicles only, ...), a confidence (value) of classification, and/or the determined freespace significance index (FSI).

Fig. 5 illustrates a current state of the ETSI CPM format and identifies where the present invention might weave into this format. Current ETSI developments to specify the CPS service are described in a Technical Report describing the CPM format and the CPM generation rules as a baseline for the specification of CPS in ETSI TS 103 324.

As shown in Fig. 5, CPM messages include an ITS (Intelligent Transport Systems) PDU (Protocol Data Unit) header and 4 types of containers: A Management Container, a Station Data Container, a plurality of Sensor Information Containers (SICs), and a plurality of Perceived Object Containers (POCs).

The ITS PDU header includes data elements like a protocol version, a message ID and a Station ID. The Management Container is mandatory and provides basic information about a transmitting vehicle (such as the position thereof). Position information is used by a receiver to reference detected objects. The Station Data Container is optional and includes additional information about the transmitting vehicle (e.g., its speed, heading, or acceleration). In addition, a CPM can include up to 128 SICs to describe the capabilities of sensors embedded in the transmitting vehicle. Finally, the POCs provide information about detected objects (e.g., a distance between the detected object and the transmitting vehicle), a speed and dimensions of an object, and the time at which these measurements were done. A single CPM can include up to 128 POCs.

The CPM generation rules define when a vehicle should generate and transmit a CPM and the information to be included in the CPM. Current ETSI CPM generation rules establish that a vehicle has to check in predetermined intervals if a new CPM should be generated and transmitted. By default, the predetermined interval is set to 100ms although it can be any multiple of 100ms in the range between 100ms and 1000ms. For every predetermined interval, a vehicle should generate a new CPM if it has detected a new object, or if its absolute position has changed by more than a predetermined amount, e.g. 4m, since the last time its data was included in a CPM, or if its absolute speed has changed by more than a predetermined value, e.g. 0.5m/s, since the last time its data was included in a CPM, or if the last time the detected object was included in a CPM was a predetermined period of time, e.g. 1 (or more) seconds, ago. A vehicle includes in a new CPM all new detected objects and those objects that satisfy at least one of the previous conditions. The vehicle still generates a CPM every second even if none of the detected objects satisfy any of the previous conditions. The information about the onboard sensors is included in the CPM only once per second.

According to Fig. 5, as further shown, the concept of a freespace significance index introduced into CPMs might weave into the pending ETSI CPM format at the Perception Data Container (cf. boxes marked FSI with indices from 1 to 128).

As also derivable from Fig. 5, the FSI can be handled similar to a concept of OSI also proposed by the inventors of this invention, wherein the concept of FSI, as a concept for classification information and significance for freespace within CPM which is dependent on criteria and configured for use in vehicle(s) in/for various situations, is configured to be independent from the concept of OSI but integratable and/or combinable, for example in a way that OSI for detected objects is used in a normal situation and FSI for detected freespaces is used in special situations/in exceptional circumstances.

In the above context, Fig. 6 illustrates the interlinking of CPM transmission and DCC in an ITS-S at layers of the ETSI ITS stack including the concept of a significance index introduced into CPMs according to the embodiment.

According to Fig. 6, while e.g. assuming a congested V2X channel, the CPS receives data from own sensors (and CAMs/CPMs of other ITS-Ss) and creates the CPM in accordance with predefined CPM generation rules. Fig. 6 also shows exemplary CPM generation rules with respect to a repetition rate and content, as explained in e.g. ETSI Technical Report 103 562 V2.1.1 (2019-12), cf. 4.3.4.2 "Perceived Object Container Inclusion Management", and as incorporated herein by reference. A created CPM then traverses the stack through the networking layer to the access layer, and the access layer then either sends or drops the CPM depending on a current channel load.

The present invention is based on and has a plurality of aspects, an overview of which is given in the following:
The present invention has been described using one preferred embodiment thereof. It is, however, understood that the present invention is not limited to the specifically described embodiment and can include and cover additional aspects, configurations and modifications without departing from the scope of the subject matter described and claimed.

Such additional aspects, configurations and modifications may, for example, include a method, a computing program, and equipment for generating a V2X message based on the significance of the information on the communication channel. The significance may be indicated by the significance index (SI) of object(s) (OSI), the significance index (SI) of freespace (FSI), and/or the whole CPM (CSI). The significance may be indicated for the whole channel by the Information Significance Level (ISL). The generation of the above V2X message determined by 'generation rules' at least includes message composition and repetition rate.

Such additional aspects, configurations and modifications may, for example, include a method, a computing program, and equipment for determining the message generation rule based on ISL. Rules may, for example, include an implicit rate-based rule, an explicit rate-based rule, a priority-based rule, a staggered rate-based rule, and a combination of thereof.

Such additional aspects, configurations and modifications may, for example, further include a method, a computing program, and equipment for encoding and decoding, transmitting and receiving, as part of V2X message, the ISL for the communication channel based on the significance of the transmitted V2X messages using a local "zero hop" value and a single hop radius.

Still further aspects, configurations and modifications may, for example, relate to a method, a computing program, and an equipment for composing, transmitting, receiving, and decoding an ITS message or part of an ITS message containing information about the geographical area which is only partially or not at all detected by the sensors of the sender ITS-S, and/or a criticality of the above area for the sender ITS-S, and/or a method, a computing program, and an equipment for deciding to transmit a CPM based on its SI and the available channel resources.

In general, embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of this invention may be implemented by computer software executable by a data processor of a system entity, such as in the processor entity, or by hardware, or by a combination of software and hardware. Further in this regard it should be noted that any blocks of logic flow shown in the figures may represent program steps, or interconnected logic circuits, blocks and functions, or a combination of program steps and logic circuits, blocks and functions. The software may be stored on physical media such as memory chips, or memory blocks implemented within the processor, magnetic media such as hard disk or floppy disks, and optical media such as for example DVD and the data variants thereof, CD.

Memory may be of any type suitable to the local technical environment and may be implemented using any suitable data storage technology, such as semiconductor-based memory devices, magnetic memory devices and systems, optical memory devices and systems, fixed memory and removable memory. Data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Electronic Design Automation (EDA) programs and tools automatically route conductors and locate components on a semiconductor chip using well established rules of design as well as libraries of pre-stored design modules. Once the design for a semiconductor circuit has been completed, the resultant design, in a standardized electronic format may be transmitted to a semiconductor fabrication facility or "fab" for fabrication.

The description so far has provided by way of an exemplary and non-limiting example a full and informative description of the exemplary embodiment of this invention. However, various modifications and adaptations may become apparent to those skilled in the relevant art in view of the foregoing description, when read in conjunction with the accompanying drawings and the appended claims. It is understood that all such and similar modifications of the teachings of this invention will still fall within the scope of this invention as defined in the appended claims.

With the present invention as described above, a method, a cooperative intelligent transport system and a computer-implemented system for encoding and decoding, transmitting, receiving and decoding, as part of a V2X message, classification for freespace in a cooperative intelligent transport system (C-ITS) using a wireless communication channel for transmitting, receiving, processing and/or discarding a plurality of collective perception messages (CPMs) containing information about one or more on-board sensors, one or more objects detected by said on-board sensors and/or one or more detected freespaces within a traffic environment, include means and steps, respectively, for determining classification information of a detected freespace, said classification information being configured to indicate to a receiver of a CPM a type of said detected freespace, determining and adding a freespace significance index (FSI) within a CPM based on said classification information of said detected freespace, accuracy and time of freespace detection, and/or a driving situation within said traffic environment, said significance index of freespace (FSI) being configured to indicate a level of significance of sharing information about a certain freespace when generating a CPM, and prioritizing freespace information within a CPM and/or prioritizing the inclusion of freespace information into a CPM in accordance with the determined FSI.

## Claims

1. A method for encoding and decoding, transmitting, receiving and decoding, as part of a V2X message, classification for freespace in a cooperative intelligent transport system (C-ITS) using a wireless communication channel for transmitting, receiving, processing and/or discarding a plurality of collective perception messages (CPMs) containing information about one or more on-board sensors, one or more objects detected by said on-board sensors and/or one or more detected freespaces within a traffic environment,
said method comprising the steps of:
determining classification information of a detected freespace, said classification information being configured to indicate to a receiver of a CPM a type of said detected freespace
determining and adding a freespace significance index (FSI) within a CPM based on said classification information of said detected freespace, accuracy and time of freespace detection, and/or a driving situation within said traffic environment, said significance index of freespace (FSI) being configured to indicate a level of significance of sharing information about a certain freespace CPM; and
prioritizing freespace information within a CPM and/or prioritizing the inclusion of freespace information into a CPM in accordance with the determined FSI.

2. A method according to claim 1, wherein said classification information includes at least one of road, off-road, drivable and on-street parking.

3. A method according to claim 1 or 2, wherein said step of determining classification information is configured to use cooperative classification based on classification information from multiple ITS-Ss, said cooperative classification including at least freespace classification from different viewing or detection angles.

4. A method according to one of the preceding claims, wherein said step of determining a freespace significance index (FSI) includes an accuracy-based determination scheme using a confidence of freespace detection, wherein the higher the confidence of freespace detection, the higher the FSI.

5. A method according to one of the preceding claims, wherein said step of determining a freespace significance index (FSI) includes a determination scheme, said determination being configured to increase the FSI if detected freespace is determined to deviate in size from freespace communicated by another ITS-S or if previously shared freespace information is determined to be outdated, to thereby provide for an adaptation of previously shared freespace.

6. A method according to one of the preceding claims, wherein said step of determining a freespace significance index (FSI) includes a situation-based determination scheme, said situation-based determination being configured to adhere to an accuracy-based determination scheme using a confidence of freespace detection in which the higher the confidence of freespace detection, the higher the FSI, in a normal driving situation, and to increase the FSI in driving situations other than a normal driving situation, to thereby prioritize the sharing of freespace information.

7. A method according to claim 6, wherein said driving situations other than a normal driving situation include at least one of a parking situation, an emergency vehicle approaching situation, and a pre-crash situation.

8. A method according to claim 6, wherein in a parking situation the FSI is increased for freespace classifying as a parking space suitable for the vehicle size and/or class and the closer such parking space is, wherein the closer such parking space, the higher the significance, to thereby prioritize the sharing of freespace classifying as a suitable parking space.

9. A method according to claim 6, wherein in an emergency vehicle approaching situation the FSI is increased for freespace classifying as usable for a vehicle to make way for an approaching emergency vehicle, to thereby prioritize the sharing of freespace classifying as space to drive to and to give way.

10. A method according to claim 6, wherein in a pre-crash situation the FSI is increased for freespace classifying as being usable for evasive maneuvers, wherein the more suitable and/or the closer such freespace to an involved vehicle, the higher the significance, to thereby prioritize the sharing of freespace classifying as being usable for evasive maneuvers.

11. A method according to claim 10, wherein the FSI is increased and/or the corresponding CPM is sent directly if it is determined that usable freespace is close and available.

12. A method according to one of the preceding claims, wherein a CPS that is creating the CPMs is configured to obtain freespace classification from entities external to an ITS stack.

13. A method according to one of the preceding claims, wherein received freespace classification information is used for applications running in a vehicle.

14. A method according to one of the preceding claims, wherein the ITS-S is a vehicle or a roadside unit (RSU), wherein the wireless communication is direct vehicle-to-x (V2X) communication, and wherein said detected freespaces are one or more freespace polygons.

15. A cooperative intelligent transport system arranged to encode and decode, transmit, receive and decode, as part of a V2X message, classification for freespace in a cooperative intelligent transport system (C-ITS) using a wireless communication channel for transmitting, receiving, processing and/or discarding a plurality of collective perception messages (CPMs) containing information about one or more on-board sensors, one or more objects detected by said on-board sensors and/or one or more detected freespaces within a traffic environment,
said cooperative intelligent transport system being arranged to perform the method according to one of the preceding claims and comprising:
a determining unit arranged to determine classification information of a detected freespace, said classification information being configured to indicate to a receiver of a CPM a type of said detected freespace;
a determining and adding unit arranged to determine and add a freespace significance index (FSI) within a CPM based on said classification information of said detected freespace, accuracy and time of freespace detection, and/or a driving situation within said traffic environment, said significance index of freespace (FSI) being configured to indicate a level of significance of sharing information about a certain freespace when generating a CPM; and
a prioritizing unit arranged to prioritize freespace information within a CPM and/or prioritizing the inclusion of freespace information into a CPM in accordance with the determined FSI.

16. A computer-implemented system arranged to encode and decode, transmit, receive and decode, as part of a V2X message, classification for freespace in a cooperative intelligent transport system (C-ITS) using a wireless communication channel for transmitting, receiving, processing and/or discarding a plurality of collective perception messages (CPMs) containing information about on-board sensors and/or objects detected by said on-board sensors within a traffic environment,
said computer-implemented system being arranged to perform the method according to one of claims 1 to 14 and comprising a memory for storing instructions which, when carried out by a processor, cause the processor to perform the steps of
determining classification information of a detected freespace, said classification information being configured to indicate to a receiver of a CPM a type of said detected freespace
determining and adding a freespace significance index (FSI) within a CPM based on said classification information of said detected freespace, accuracy and time of freespace detection, and/or a driving situation within said traffic environment, said significance index of freespace (FSI) being configured to indicate a level of significance of sharing information about a certain freespace when generating a CPM; and
prioritizing freespace information within a CPM and/or prioritizing the inclusion of freespace information into a CPM in accordance with the determined FSI.

## Amended claims

### Amended claims in accordance with Rule 137(2) EPC.

1. A method for encoding and decoding, transmitting, receiving and decoding, as part of a V2X message, classification for freespace in a cooperative intelligent transport system (C-ITS) using a wireless communication channel for transmitting, receiving, processing and/or discarding a plurality of collective perception messages (CPMs) containing information about one or more on-board sensors, one or more objects detected by said on-board sensors and/or one or more detected freespaces within a traffic environment,
said method comprising the steps of:
determining classification information of a detected freespace, said classification information being configured to indicate to a receiver of a CPM a type of said detected freespace;
determining and adding a freespace significance index (FSI) within a CPM based on said classification information of said detected freespace, accuracy and time of freespace detection, and/or a driving situation within said traffic environment, said significance index of freespace (FSI) being configured to indicate a level of significance of sharing information about a certain freespace CPM; and
prioritizing freespace information within a CPM and/or prioritizing the inclusion of freespace information into a CPM in accordance with the determined FSI such that a higher significance of sharing means that a certain classified freespace is determined to be more relevant and/or significant to share with other vehicles, and therefore is determined to be included in a CPM.

2. A method according to claim 1, wherein said classification information includes at least one of road, off-road, drivable and on-street parking.

3. A method according to claim 1 or 2, wherein said step of determining classification information is configured to use cooperative classification based on classification information from multiple ITS-Ss, said cooperative classification including at least freespace classification from different viewing or detection angles.

4. A method according to one of the preceding claims, wherein said step of determining a freespace significance index (FSI) includes an accuracy-based determination scheme using a confidence of freespace detection, wherein the higher the confidence of freespace detection, the higher the FSI.

5. A method according to one of the preceding claims, wherein said step of determining a freespace significance index (FSI) includes a determination scheme, said determination being configured to increase the FSI if detected freespace is determined to deviate in size from freespace communicated by another ITS-S or if previously shared freespace information is determined to be outdated, to thereby provide for an adaptation of previously shared freespace.

6. A method according to one of the preceding claims, wherein said step of determining a freespace significance index (FSI) includes a situation-based determination scheme, said situation-based determination being configured to adhere to an accuracy-based determination scheme using a confidence of freespace detection in which the higher the confidence of freespace detection, the higher the FSI, in a normal driving situation, and to increase the FSI in driving situations other than a normal driving situation, to thereby prioritize the sharing of freespace information.

7. A method according to claim 6, wherein said driving situations other than a normal driving situation include at least one of a parking situation, an emergency vehicle approaching situation, and a pre-crash situation.

8. A method according to claim 6, wherein in a parking situation the FSI is increased for freespace classifying as a parking space suitable for the vehicle size and/or class and the closer such parking space is, wherein the closer such parking space, the higher the significance, to thereby prioritize the sharing of freespace classifying as a suitable parking space.

9. A method according to claim 6, wherein in an emergency vehicle approaching situation the FSI is increased for freespace classifying as usable for a vehicle to make way for an approaching emergency vehicle, to thereby prioritize the sharing of freespace classifying as space to drive to and to give way.

10. A method according to claim 6, wherein in a pre-crash situation the FSI is increased for freespace classifying as being usable for evasive maneuvers, wherein the more suitable and/or the closer such freespace to an involved vehicle, the higher the significance, to thereby prioritize the sharing of freespace classifying as being usable for evasive maneuvers.

11. A method according to claim 10, wherein the FSI is increased and/or the corresponding CPM is sent directly if it is determined that usable freespace is close and available.

12. A method according to one of the preceding claims, wherein a CPS that is creating the CPMs is configured to obtain freespace classification from entities external to an ITS stack.

13. A method according to one of the preceding claims, wherein received freespace classification information is used for applications running in a vehicle.

14. A method according to one of the preceding claims, wherein the ITS-S is a vehicle or a roadside unit (RSU), wherein the wireless communication is direct vehicle-to-x (V2X) communication, and wherein said detected freespaces are one or more freespace polygons.

15. A cooperative intelligent transport system arranged to encode and decode, transmit, receive and decode, as part of a V2X message, classification for freespace in a cooperative intelligent transport system (C-ITS) using a wireless communication channel for transmitting, receiving, processing and/or discarding a plurality of collective perception messages (CPMs) containing information about one or more on-board sensors, one or more objects detected by said on-board sensors and/or one or more detected freespaces within a traffic environment,
said cooperative intelligent transport system being arranged to perform the method according to one of the preceding claims and comprising:
a determining unit arranged to determine classification information of a detected freespace, said classification information being configured to indicate to a receiver of a CPM a type of said detected freespace;
a determining and adding unit arranged to determine and add a freespace significance index (FSI) within a CPM based on said classification information of said detected freespace, accuracy and time of freespace detection, and/or a driving situation within said traffic environment, said significance index of freespace (FSI) being configured to indicate a level of significance of sharing information about a certain freespace when generating a CPM; and
a prioritizing unit arranged to prioritize freespace information within a CPM and/or prioritizing the inclusion of freespace information into a CPM in accordance with the determined FSI such that a higher significance of sharing means that a certain classified freespace is determined to be more relevant and/or significant to share with other vehicles, and therefore is determined to be included in a CPM.

16. A computer-implemented system arranged to encode and decode, transmit, receive and decode, as part of a V2X message, classification for freespace in a cooperative intelligent transport system (C-ITS) using a wireless communication channel for transmitting, receiving, processing and/or discarding a plurality of collective perception messages (CPMs) containing information about on-board sensors and/or objects detected by said on-board sensors within a traffic environment,
said computer-implemented system being arranged to perform the method according to one of claims 1 to 14 and comprising a memory for storing instructions which, when carried out by a processor, cause the processor to perform the steps of
determining classification information of a detected freespace, said classification information being configured to indicate to a receiver of a CPM a type of said detected freespace
determining and adding a freespace significance index (FSI) within a CPM based on said classification information of said detected freespace, accuracy and time of freespace detection, and/or a driving situation within said traffic environment, said significance index of freespace (FSI) being configured to indicate a level of significance of sharing information about a certain freespace when generating a CPM; and
prioritizing freespace information within a CPM and/or prioritizing the inclusion of freespace information into a CPM in accordance with the determined FSI such that a higher significance of sharing means that a certain classified freespace is determined to be more relevant and/or significant to share with other vehicles, and therefore is determined to be included in a CPM.
